# EUROPÄISCHE PATENTSCHRIFT

(11) **EP 3 406 387 B1**
(45) Veröffentlichungstag und Bekanntmachung des Hinweises auf die Patenterteilung: **07.09.2022**
(21) Anmeldenummer: 17172893.4
(22) Anmeldetag: 24.05.2017
(51) Int. Cl.: B23K 9/10, B23K 9/32, B23K 37/02

(54) **SCHWEISSSTROMQUELLE UND SYSTEM ZUR BEFESTIGUNG EINER KOMPONENTE AUF DEREN GEHÄUSEOBERSEITE**
WELDING CURRENT SOURCE AND SYSTEM FOR FIXING A COMPONENT ON THE TOP OF ITS HOUSING
POSTE DE SOUDAGE ET SYSTÈME DE FIXATION D'UN COMPOSANT SUR LA FACE SUPÉRIEURE DE SON BOÎTIER

(43) Veröffentlichungstag der Anmeldung: 28.11.2018
(73) Patentinhaber: EWM AG, 56271 Mündersbach (DE)
(72) Erfinder: SZCZESNY, Jan, 56271 Mündersbach (DE)
(74) Vertreter: Cohausz & Florack

(56) Entgegenhaltungen:
- WO-A1-89/08002
- WO-A1-2010/132904
- US-A1- 2006 102 693
- US-A1- 2017 050 259

## Beschreibung

Die Erfindung betrifft eine Schweißstromquelle mit einem Gehäuse, das eine Gehäuseoberseite aufweist. Darüber hinaus betrifft die Erfindung ein System mit einer solchen Schweißstromquelle.

Schweißstromquellen werden zum Lichtbogenschweißen, insbesondere zum Metallschutzgasschweißen (MSG-Schweißen) oder zum Wolfram-Inertgasschweißen (WIG-Schweißen), verwendet. Beim Schweißen ist es üblich, weitere beim Schweißen verwendete Komponenten, wie zum Beispiel einen Drahtvorschubkoffer beim MSG-Schweißen, auf das Gehäuse der Schweißstromquelle zu stellen. Dadurch kann zum einen eine kompakte Aufstellung der beim Schweißen verwendeten Komponenten erreicht werden und zum anderen können die Komponenten zusammen mit der Schweißstromquelle transportiert werden, insbesondere wenn diese fahrbar ausgestaltet oder auf einem Wagen positioniert ist.

Wenn eine Komponente wie ein Drahtvorschubkoffer ohne weitere Befestigung auf eine Schweißstromquelle gestellt wird, besteht die Gefahr, dass der Drahtvorschubkoffer beim Transport oder bei Zug an einem mit dem Drahtvorschubkoffer über ein Schlauchpaket verbundenen Schweißbrenner von der Schweißstromquelle herunterfällt.

Zwar besteht die Möglichkeit, die Komponenten direkt mit dem Gehäuse der Schweißstromquelle zu verschrauben, indem entsprechende Gewindebohrungen in dem Gehäuse vorgesehen werden. Dies führt jedoch zu zusätzlichen Öffnungen im Gehäuse, durch die Feuchtigkeit und Schmutz eindringen kann. Weiterhin erfordern verschiedene Komponenten verschiedene Positionen der Bohrungen, so dass bei Verwendung verschiedener Komponenten eine Vielzahl von Bohrungen in das Gehäuse eingebracht werden muss, wodurch sich das Feuchtigkeits- bzw. Schmutzproblem noch weiter verschärft.

Weiterhin sind einzelne Schweißstromquellen mit Befestigungssystemen bekannt, um einen Drahtvorschubkoffer auf dem Gehäuse der Schweißstromquelle zu befestigen. Diese sind jedoch typischerweise an einen spezifischen Drahtvorschubkoffer angepasst, so dass die Befestigung eines anderen Drahtvorschubkoffermodells oder gar einer anderen Komponente nicht möglich ist.

Die WO 2010/132904 A1, die als nächstliegender Stand der Technik gesehen wird, offenbart einen Fahrwagen für ein Schweißgerät, auf dem ein Schweißgerät und ein Drahtvorschubgerät positioniert werden können. Weiterhin kann das Drahtvorschubgerät direkt auf das Schweißgerät aufgesetzt werden. Weiterhin ist aus der US 2006/102693 A1 ein Schweißgerätgehäuse mit Schiebetür für eine Schweißgerät mit Verbrennungsmotor bekannt. Die US 2017/050259 A1 offenbart zudem ein tragbares Lichtbogenbolzenschweißgerät mit einem im Gehäuse angeordneten Energiespeicher.

Vor diesem Hintergrund liegt der vorliegenden Erfindung die Aufgabe zugrunde, eine Schweißstromquelle und ein System mit einer solchen Schweißstromquelle zur Verfügung zu stellen, die eine sichere und flexible Befestigung von Komponenten an der Schweißstromquelle ermöglichen.

Diese Aufgabe wird bei einer Schweißstromquelle mit einem Gehäuse, das eine Gehäuseoberseite aufweist, erfindungsgemäß dadurch gelöst, dass am Gehäuse ein Profil mit einer sich entlang einer Seitenkante der Gehäuseoberseite erstreckenden Nut zur Aufnahme von Befestigungselementen zur Befestigung einer Komponente auf der Gehäuseoberseite vorgesehen ist und dass am Gehäuse ein weiteres Profil mit einer sich entlang einer der Seitenkante gegenüberliegenden weiteren Seitenkante der Gehäuseoberseite erstreckenden Nut zur Aufnahme von Befestigungselementen zur Befestigung einer Komponente auf der Gehäuseoberseite vorgesehen ist. Weiterhin wird die zuvor genannte Aufgabe gelöst durch ein System mit einer solchen Schweißstromquelle sowie mit einem oder mehreren Befestigungselementen, insbesondere Nutensteinen, die in die sich entlang der Seitenkante der Gehäuseoberseite erstreckende Nut einsetzbar sind.

Durch das Vorsehen eines Profils mit einer sich entlang einer Seitenkante der Gehäuseoberseite erstreckenden Nut, in die Befestigungselemente zur Befestigung einer Komponente auf der Gehäuseoberseite einsetzbar sind, lassen sich Komponenten an der Gehäuseoberseite der Schweißstromquelle befestigen, ohne dass Bohrungen durch das Gehäuse erforderlich sind. Dadurch bleibt das Gehäuse der Schweißstromquelle unbeschädigt und bietet einen guten Schutz gegen Feuchtigkeit oder Verunreinigungen.

Weiterhin erlaubt das Profil eine flexible Montage von Komponenten an der Gehäuseoberseite. Insbesondere erlaubt die Aufnahme der Befestigungselemente in der Nut das bedarfsgerechte Bereitstellen variabler Anschlusspunkte zur Befestigung verschiedener Komponenten.

Die Schweißstromquelle weist ein Gehäuse auf. In dem Gehäuse sind insbesondere die einzelnen Komponenten untergebracht, die zum Betrieb der Schweißstromquelle erforderlich sind, wie zum Beispiel ein Gleichrichter, ein Inverter, eine Steuereinrichtung und/oder ein Kühlmodul.

Das Gehäuse weist eine Gehäuseoberseite auf. Die Gehäuseoberseite ist vorzugsweise im Wesentlichen flach und horizontal ausgebildet, so dass sich Komponenten wie zum Beispiel ein Drahtvorschubkoffer sicher auf der Gehäuseoberseite abstellen lassen. Bei einem im Wesentlichen quaderförmigen Gehäuse weist das Gehäuse neben der Gehäuseoberseite insbesondere noch eine Vorderseite, eine Rückseite, eine Unterseite und zwei Seitenflächen auf. Das Gehäuse kann jedoch auch eine andere Grundform mit mehr oder weniger Seiten aufweisen.

In das Gehäuse können Bedien- und Anzeigeelemente wie Knöpfe, Drehregler, Bildschirme, LEDs etc. integriert sein. Zudem können am Gehäuse Anschlüsse für Strom, Gas, Kühlmedien, Daten etc. vorgesehen sein. Vorzugsweise sind die Bedien- und Anzeigeelemente in die Vorderseite des Gehäuses integriert. Anschlüsse sind vorzugsweise in die Vorder- und/oder Rückseite des Gehäuses integriert.

Am Gehäuse der Schweißstromquelle ist ein Profil mit einer sich entlang einer Seitenkante der Gehäuseoberseite erstreckenden Nut vorgesehen. Bei dem Profil kann es sich beispielsweise um ein Aluminiumstranggussprofil handeln, das eine leichte Bauweise mit hoher Stabilität verbindet.

Bei der Seitenkante der Gehäuseoberseite, an der sich die Nut erstreckt, handelt es sich vorzugsweise um eine Seitenkante zu einer Seitenfläche des Gehäuses, insbesondere um eine Seitenkante, die im Wesentlichen senkrecht zur Vorder- bzw. Rückseite der Schweißstromquelle verläuft. Die Positionierung an einer Seitenfläche ist bevorzugt, da an der Vorder- und Rückseite der Schweißstromquelle typischerweise mehr Anschluss-, Anzeige- und Bedienelemente vorgesehen sind als an den Seitenflächen, so dass an letztgenannten eine einfachere Montage von Komponenten möglich ist, ohne die Anzeige- und Bedienelemente bzw. Anschlüsse der Schweißstromquelle zu behindern.

Die Nut ist zur Aufnahme von Befestigungselementen zur Befestigung einer Komponente auf der Gehäuseoberseite vorgesehen, insbesondere eingerichtet. Insbesondere ist die Nut derart ausgestaltet, dass Befestigungselemente wie zum Beispiel Nutensteine frei in der Nut verschoben werden können, um sie zum Anschluss einer zu befestigenden Komponente an der gewünschten Stelle zu positionieren.

Die Befestigungselemente und die Nut sind vorzugsweise so aneinander angepasst, dass die Befestigungselemente, wenn diese in der Nut angeordnet sind, durch die Nutöffnung der Nut zugänglich sind, so dass eine Befestigung von Komponenten an den Befestigungselementen durch die Nutöffnung möglich ist.

Wird als Befestigungselement beispielsweise ein Nutenstein mit einer Gewindebohrung verwendet, so ist vorzugsweise die Gewindebohrung, wenn der Nutenstein in der Nut angeordnet ist, derart durch die Nutöffnung zugänglich, dass eine Komponente an den Nutensteinen angeschraubt werden kann.

Das Profil mit der Nut ist insbesondere zur Aufnahme von Befestigungselementen zur Befestigung einer Komponente auf der Gehäuseoberseite vorgesehen und entsprechend an einer Seitenkante der Gehäuseoberseite angeordnet. Die Befestigungselemente können jedoch auch verwendet werden, um eine Komponente an der Seite des Gehäuses zu befestigen, die im Bereich des Profils an die Gehäuseoberseite angrenzt.

Im Folgenden werden verschiedene Ausführungsformen der Schweißstromquelle und des Systems beschrieben, wobei die einzelnen Ausführungsformen unabhängig voneinander sowohl für die Schweißstromquelle als auch für das System gelten und zudem untereinander kombiniert werden können.

Erfindungsgemäß ist am Gehäuse ein weiteres Profil mit einer sich entlang einer der Seitenkante gegenüberliegenden weiteren Seitenkante der Gehäuseoberseite erstreckenden Nut zur Aufnahme von Befestigungselementen zur Befestigung einer Komponente auf der Gehäuseoberseite vorgesehen. Durch das Vorsehen zweier Profile an gegenüberliegenden Seitenkanten der Gehäuseoberseite kann eine Komponente beidseitig der Gehäuseoberseite befestigt und damit sicher gehalten werden. Vorzugsweise handelt es sich bei der Seitenkante und der weiteren Seitenkante um Seitenkanten zu Seitenflächen des Gehäuses.

Bei einer Ausführungsform weist die Nut eine sich entlang ihrer Erstreckungsrichtung erstreckende Hinterschneidung auf, um ein in der Nut angeordnetes Befestigungselement in der Nut zu halten. Vorzugsweise sind beidseitig der Nutöffnung Hinterschneidungen vorgesehen, um ein in der Nut angeordnetes Befestigungselement in der Nut zu halten. Durch die Hinterschneidungen kann das Befestigungselement so in der Nut fixiert werden, dass es nicht versehentlich aus der Nut herausfallen kann. Gleichzeitig wird die Bewegung des Befestigungselements entlang der Erstreckung der Nut durch die Hinterschneidung jedoch nicht behindert, so dass das Befestigungselement in der Nut verschoben und so an der gewünschten Stelle positionert werden kann.

Bei einer weiteren Ausführungsform weist das Profil an einem Ende eine Einführöffnung zum Einführen von Befestigungselementen in die Nut auf. Zu diesem Zweck ist das Profil insbesondere einseitig geöffnet. Optional kann eine Kappe vorgesehen sein, die abnehmbar auf die Einführöffnung aufsteckbar ist, um ein versehentliches Herausfallen der Befestigungselemente aus dem Profil zu verhindern. Durch das Vorsehen einer Einführöffnung an einem Ende des Profils kann die Form der Nut insbesondere so ausgebildet werden, dass ein Herausfallen der Befestigungselemente aus der Nutöffnung unmöglich ist, insbesondere indem die Nut ein oder mehrere Hinterschneidungen aufweist, die die Befestigungselemente in der Nut halten.

Bei einer weiteren Ausführungsform ist die Einführöffnung an der Rückseite des Gehäuses angeordnet. Dies erlaubt einen leichteren Zugriff auf die Einführöffnung. Weiterhin erlaubt dies eine flexiblere Ausgestaltung der Vorderseite des Gehäuses, an der zum Beispiel ein Bedien- oder Anzeigeelement oder auch ein Griff im Bereich der Seitenkante zur Gehäuseoberseite angeordnet sein kann. Insbesondere kann das Profil zur Vorderseite geschlossen ausgebildet werden, so dass die Anordnung von Bedien-, Anzeigeelementen oder Griffen auf der Vorderseite nicht durch die Lage des Profils eingeschränkt wird.

Bei einer weiteren Ausführungsform liegt die Nutöffnung der Nut in einer Ebene, die zu der Gehäuseoberseite in einem Winkel von mindestens 45° verläuft, vorzugsweise im Wesentlichen senkrecht zur Gehäuseoberseite. Indem die Nutöffnung nicht in der Ebene der Gehäuseoberseite sondern in einer Ebene liegt, die zu dieser mindestens einen Winkel von 45° aufweist, ist eine einfachere und stabilere Befestigung der Komponente an Befestigungselementen in der Nut möglich. Insbesondere ist die auf der Gehäuseoberseite anzuordnende Komponente ihrer Befestigung nicht selbst im Weg.

Vorzugsweise liegt die Nutöffnung in einer Ebene senkrecht zur Gehäuseoberseite und liegt insbesondere in der Ebene einer Seitenfläche der Schweißstromquelle. Hierdurch wird eine besonders sichere und leicht zugängliche Befestigung der Komponente erreicht. Zudem ist die winklige Ausrichtung der Nutöffnung, insbesondere die Ausrichtung in einer Seitenfläche des Gehäuses vorteilhaft, da auf diese Weise die für die Anordnung einer Komponente zur Verfügung stehende Fläche auf der Gehäuseoberseite nicht durch in der Gehäuseoberseite liegende Nutöffnungen der Profile eingeschränkt wird. Sind zwei Profile an gegenüberliegenden Seitenkanten der Gehäuseoberseite vorgesehen, kann die Komponente oder ein Befestigungsmittel für die Komponente die Gehäuseoberfläche insbesondere klammerartig umgreifen, so dass die Komponente stabil mit dem Gehäuse verbunden werden kann.

Bei einer weiteren Ausführungsform ist mindestens ein Steg vorgesehen, der sich über oder neben der Nut über die Nutöffnung erstreckt. Vorzugsweise sind mehrere derartige Stege vorgesehen, beispielsweise ein Steg an jedem Ende des Profils. Auf diese Weise wird das Profil stabilisiert. Insbesondere kann durch die Stege ein Aufreißen oder Zusammenstauchen des Profils an der Nutöffnung verhindert werden. Der Steg kann beispielsweise als Teil des Profils oder eines an das Profil angrenzenden Gehäuseteils ausgebildet sein.

Bei einer weiteren Ausführungsform sind die Befestigungselemente in der Nut entlang der Seitenkante verschiebbar. Auf diese Weise können die Befestigungselemente in der Nut praktisch beliebig positioniert werden, so dass variable Anschlusspunkte für verschiedenartige Komponenten geschaffen werden können.

Bei einer weiteren Ausführungsform umfasst das System ein auf die Gehäuseoberseite der Schweißstromquelle aufsetzbares Aufsatzelement, das über die Befestigungselemente am Gehäuse befestigt werden kann, wenn die Befestigungselemente in der Nut angeordnet sind, und Befestigungsmittel zur Befestigung einer Komponente auf dem Aufsatzelement aufweist. Mithilfe eines solchen Aufsatzelements können beispielsweise auch Komponenten an den Befestigungselementen in der Nut befestigt werden, die nicht an die Abmessungen der Gehäuseoberseite und/oder die Lage der Nutöffnung angepasst sind. Das Aufsatzelement fungiert dadurch als Adapter zwischen den Befestigungselementen in der Nut des Profils und der auf der Gehäuseoberseite zu befestigenden Komponente. Insbesondere kann das Aufsatzelement einen klammerförmigen Grundkörper aufweisen mit einer Grundplatte zur Positionierung auf der Gehäuseoberseite und mit einem oder mehreren seitlichen Flanschbereichen, die an die Lage der Nutöffnungen des Profils angepasst sind und mit den Befestigungselementen in der Nut verbunden werden können. Beispielsweise können der oder die Flanschbereiche an die Lage der Nutöffnung angepasste Bohrungen aufweisen, durch die die Flanschbereiche mit den Befestigungselementen in der Nutverschraubbar sind.

An der Grundplatte können beispielsweise Bohrlöcher, Stifte, Schrauben und dergleichen als Befestigungsmittel zur Befestigung einer Komponente auf dem Aufsatzelement vorgesehen sein.

Bei einer weiteren Ausführungsform weist das Aufsatzelement Befestigungsmittel zur Befestigung mehrerer Komponenten auf dem Aufsatzelement auf. Auf diese Weise können mehrere Komponenten, beispielsweise zwei Drahtvorschubkoffer, auf dem Gehäuse bzw. der Gehäuseoberseite der Schweißstromquelle befestigt werden, insbesondere auch dann wenn die Gehäuseoberseite der Schweißstromquelle für eine direkte Befestigung ohne Aufsatzelement nicht ausreichend groß wäre.

Bei einer weiteren Ausführungsform umfassen die Befestigungsmittel des Aufsatzelements einen Dorn zur vorzugsweise drehbaren Befestigung einer Komponente durch Aufsetzen der Komponente auf den Dorn. Insbesondere ist der Dorn in vertikaler Richtung ausgerichtet, wenn das Aufsatzelement auf das Gehäuse der Schweißstromquelle aufgesetzt ist. Die Komponente weist vorzugsweise eine entsprechende Vertiefung auf, in die der Dorn beim Aufsetzen der Komponente auf den Dorn eingeführt werden kann. Die Befestigungsmittel des Aufsatzelements können auch mehrere Dorne umfassen, um mehrere Komponenten durch Aufsetzen einer jeweiligen Komponente auf einen Dorn insbesondere drehbar befestigen zu können.

Durch das Aufsetzen einer Komponente auf einen solchen Dorn wird insbesondere ein Drehgelenk bereitgestellt, so dass sich die Komponente um die eigene Achse drehen lässt. Dies ermöglicht eine flexiblere Arbeitsweise. Handelt es sich bei der Komponente beispielsweise um einen Drahtvorschubkoffer, so kann sich dieser mitdrehen, wenn der Bediener eines mit dem Drahtvorschubkoffer über ein Schlauchpaket verbundenen Schweißbrenners um die Schweißstromquelle herumgeht. Dadurch wird der Arbeitsradius für den Bediener erhöht, ohne dass die Schweißstromquelle versetzt werden muss.

Bei einer weiteren Ausführungsform umfasst das System weiter eine auf den Dorn des Aufsatzelements aufsteckbare Dornverlängerung, mit der die Länge des Dorns verlängert werden kann. Auf diese Weise kann die Dornlänge flexibel an den Unterbau der auf den Dorn aufzusetzenden Komponente aufgepasst werden. Beispielsweise kann bei auf den Dorn aufgesetzter Dornverlängerung ein Drahtvorschubkoffer auf einem Rollwagen direkt auf das Aufsatzelement aufgesetzt werden, ohne den Rollwagen demontieren zu müssen, da der durch den Rollwagen erhöhte Bauraum durch die Dornverlängerung kompensiert wird.

Bei einer weiteren Ausführungsform umfasst das System weiter eine Komponente, insbesondere eine Schweißkomponente, die auf der Gehäuseoberseite der Schweißstromquelle positioniert und über die Befestigungselemente, wenn diese in der Nut angeordnet sind, oder über ein über die Befestigungselemente am Gehäuse befestigbares Aufsatzelement am Gehäuse befestigt werden kann. Bei der Komponente kann es sich beispielsweise um ein Drahtvorschubgerät handeln.

Weitere Vorteile und Merkmale der Schweißstromquelle und des Systems ergeben sich aus der nachfolgenden Beschreibung von Ausführungsbeispielen, wobei auf die beigefügte Zeichnung Bezug genommen wird.

In der Zeichnung zeigen:
- Fig. 1: ein Ausführungsbeispiel der Schweißstromquelle,
- Fig. 2: eine Detaildarstellung der Schweißstromquelle aus Fig. 1,
- Fig. 3: ein Profil der Schweißstromquelle aus Fig. 1,
- Fig. 4: ein Befestigungselement in Form eines Nutensteins für das Profil in Fig. 3,
- Fig. 5: das Profil aus Fig. 3 mit eingesetztem Nutenstein im Querschnitt,
- Fig. 6: ein auf die Gehäuseoberseite der Schweißstromquelle aus Fig. 1 aufsetzbares Aufsatzelement,
- Fig. 7: ein alternatives auf die Gehäuseoberseite der Schweißstromquelle aus Fig. 1 aufsetzbares Aufsatzelement,
- Fig. 8: ein Ausführungsbeispiel des Systems mit dem Aufsatzelement aus Fig. 6,
- Fig. 9: ein weiteres Ausführungsbeispiel des Systems mit dem Aufsatzelement aus Fig. 7 und
- Fig. 10: ein weiteres Ausführungsbeispiel des Systems mit dem Aufsatzelement aus Fig. 6.

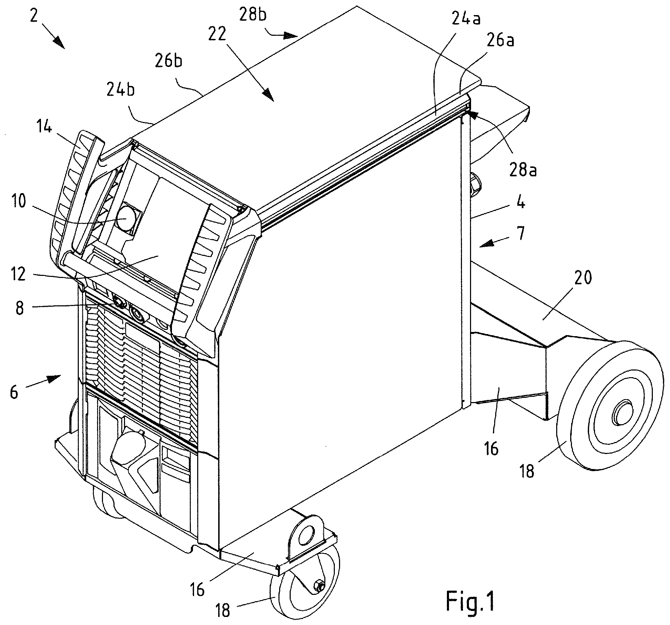

Figur 1 zeigt ein erstes Ausführungsbeispiel einer Schweißstromquelle in perspektivischer Ansicht. Die Schweißstromquelle 2 weist ein Gehäuse 4 auf, in dem die einzelnen zum Betrieb der Schweißstromquelle 2 erforderlichen Komponenten integriert sind, insbesondere ein Inverter, eine Kühleinheit und eine Steuereinrichtung. An der Vorderseite 6 und der Rückseite 7 des Gehäuses sind verschiedene Anschlüsse 8 vorgesehen, zum Beispiel zwei Anschlussbuchsen für den Schweißstrom (Plus- und Minuspol), eine Anschlussbuchse für ein Drahtvorschubgerät, eine Anschlussbuchse für weiteres Zubehör wie zum Beispiel externe Bedieneinheiten, Schnittstellen zum Anschluss von Fernsteuerungen etc. Weiterhin sind in die Vorderseite 6 Bedien- bzw. Anzeigeelemente integriert wie Knöpfe und Regler 10 oder ein Bildschirm 12.

An der Vorderseite 6 sind zudem zwei Griffe 14 vorgesehen, um die Schweißstromquelle mit der Hand zu positionieren. Zur Positionierung der Schweißstromquelle sind weiterhin über Anbauelemente 16 am Gehäuse 4 befestigte Räder 18 vorgesehen. Das hintere Anbauelement 16 weist eine Plattform 20 auf, auf der Gasflaschen positioniert werden können, beispielsweise zur Schutzgasversorgung beim MSG-Schweißen.

Das Gehäuse 4 weist eine flache Gehäuseoberseite 22 auf. Beim Elektroschweißen ist es üblich, weitere neben der Schweißstromquelle für das Schweißen verwendete Komponenten, insbesondere ein Drahtvorschubgerät, auf die Gehäuseoberseite 22 der Schweißstromquelle zu stellen, so dass dieses zum Beispiel zusammen mit der Schweißstromquelle auf den Rädern 18 zum nächsten Einsatzort gefahren werden kann.

Im Stand der Technik war es üblich, eine Komponente wie ein Drahtvorschubgerät einfach direkt auf die Gehäuseoberseite 22 zu stellen und ggf. mit der Gehäuseoberseite zu verschrauben. Das Verschrauben des Drahtvorschubgeräts mit der Gehäuseoberseite 22 erfordert jedoch entsprechende Bohrungen im Gehäuse, deren Positionen an ein bestimmtes Drahtvorschubgerät angepasst sind, so dass die Verwendung anderer Komponenten ggf. nicht möglich ist oder zusätzliche Bohrungen erfordert. Weiterhin können durch die Bohrungen im Gehäuse Staub oder Feuchtigkeit eindringen und die darin befindlichen Komponenten verunreinigen oder beschädigen.

Um dieses Problem zu überwinden weist die Schweißstromquelle 2 am Gehäuse 4 zwei Profile 24a-b auf, die sich entlang gegenüberliegender Seitenkanten 26a-b der Gehäuseoberseite 22 erstrecken und jeweils eine sich ebenfalls entlang der jeweiligen Seitenkanten 26a-b erstreckende Nut 28a-b aufweisen. Bei den Profilen 24a-b kann es sich insbesondere um Aluminiumstranggussprofile handeln.

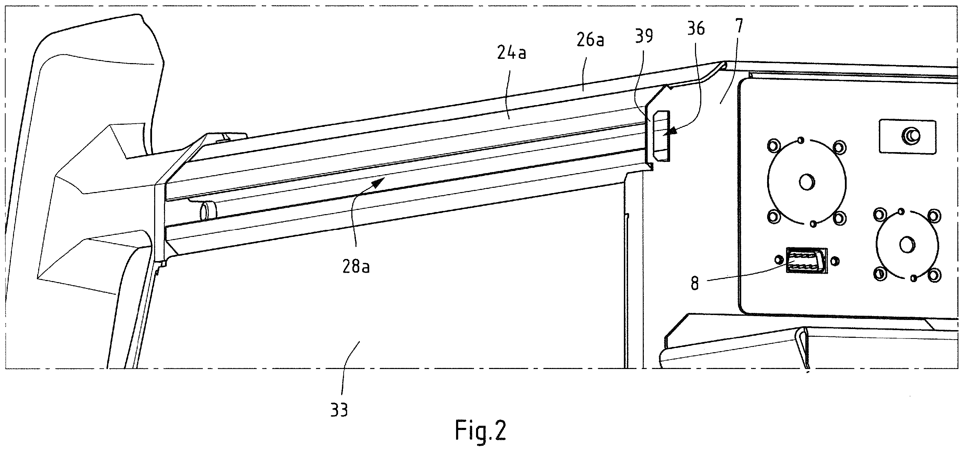

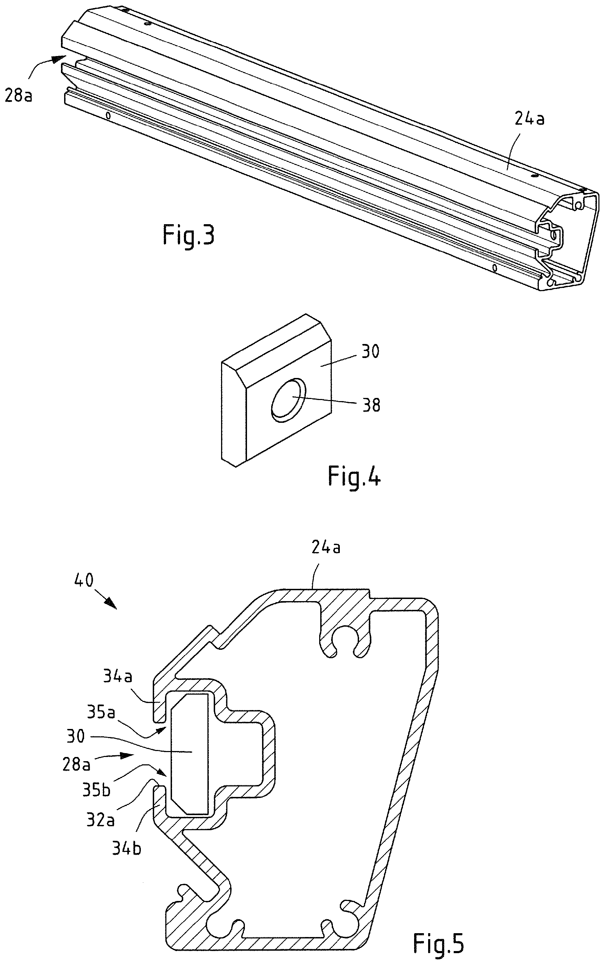

Figur 2 zeigt eine perspektive Detaildarstellung der Schweißstromquelle 2 von schräg hinten, die das Profil 24a an der Seitenkante 26a mit der Nut 28a zeigt. Figur 3 zeigt zudem das freigestellte Profil 24a in perspektivischer Darstellung.

In die Nuten 28a-b sind Befestigungselemente 30 in Form von Nutensteinen einsetzbar. Eine perspektivische Ansicht eines solchen Nutensteins 30 ist in Figur 4 dargestellt. Figur 5 zeigt den Querschnitt des Profils 24a mit einem darin eingesetzten Nutenstein 30.

Die Außenkontur des Nutensteins 30 und die Innenkontur der Nut 28a sind derart aneinander angepasst, dass sich der Nutenstein 30 frei entlang der Erstreckungsrichtung der Nut 28a bewegen, jedoch nicht durch die Nutöffnung 32a der Nut 28a herausfallen kann. Zu diesem Zweck weist die Nut 28a zwei Vorsprünge 34a-b auf, die zwei sich oben und unten der Nutöffnung 32a erstreckende Hinterschneidungen 35a-b bilden, durch die der Nutenstein 30 in der Nut 28a gehalten wird.

Um die Nutensteine 30 in die Nuten 28a-b einsetzen zu können, weisen die Profile 24a-b an ihrem jeweiligen Ende auf der Rückseite des Gehäuses 4 eine Einführöffnung 36 auf, die so bemessen ist, dass die Nutensteine 30 durch die Einführöffnungen 36 in die Nuten 28a-b eingeführt werden können.

Durch die in die Nuten 28a-b eingesetzten Nutensteine 30 werden flexibel entlang der Seitenkanten 26a-b positionierbare Anschlusspunkte zur Befestigung von Komponenten auf der Gehäuseoberseite 22 zur Verfügung gestellt. Die Nutensteine 30 weisen vorliegend Gewindebohrungen 38 auf, die, wenn die Nutensteine 30 in die Nuten 28a-b eingesetzt sind, im Bereich der Nutöffnungen 32a-b liegen, so dass eine Komponente oder ein Aufsatzelement von außen durch die jeweilige Nutöffnung 32ab mit dem Nutenstein 30 verschraubt werden kann, um die jeweilige Komponente an der Gehäuseoberseite 22 zu befestigen.

Zur Stabilisierung der Profile 24a-b sind im Bereich der Einführöffnungen 36 Stege 39 vorgesehen, die sich neben den Nuten 28a-b über die jeweilige Nutöffnung 32a-b erstrecken. Dadurch kann die Nuten 28a-b zusammendrückenden oder aufreißenden Kräften besser standgehalten werden, so dass die Größe der Nuten 28a-b und insbesondere der Nutöffnungen 32a-b dauerhaft stabil bleibt.

Die Nutöffnungen 32a-b liegen vorliegend in der Ebene der jeweiligen Seitenfläche 33 des Gehäuses 4 und damit senkrecht zur Gehäuseoberseite 22. Dies hat zum einen den Vorteil, dass die Auflagefläche der Gehäuseoberseite 22 nicht durch die Nutöffnungen 32a-b der Profile 24a-b eingeschränkt wird. Zum anderen ermöglicht dies, eine Komponente über die Seitenflächen an der Gehäuseoberseite 22 zu befestigen, wodurch einerseits die Montage erleichtert und andererseits ein sicherer Halt auf der Gehäuseoberseite 22 erreicht wird.

Eine auf der Gehäuseoberseite 22 anzuordnende Komponente, z.B. ein Drahtvorschubkoffer, kann beispielsweise mit seitlichen Flanschelementen versehen sein, die, wenn die Komponente auf der Gehäuseoberseite 22 positioniert ist, über die Seitenkanten 26a-b an den Profilen 24a-b herunterreichen und in der Höhe der Nutöffnungen 32a-b Bohrungen aufweisen, durch die die Flanschelemente mit den Befestigungselementen 30 in den Nuten 28a-b verschraubt werden können.

Die Schweißstromquelle 2 und die zugehörigen Befestigungselemente 30 bilden zusammen ein Ausführungsbeispiel des Systems 40.

Anstatt eine Komponente wie ein Drahtvorschubgerät direkt mit den Nutensteinen 30 zu verbinden, können auch separate Aufsatzelemente verwendet werden, die gleichsam als Adapter zwischen der Schweißstromquelle 2 und der darauf zu befestigenden Komponente fungieren.

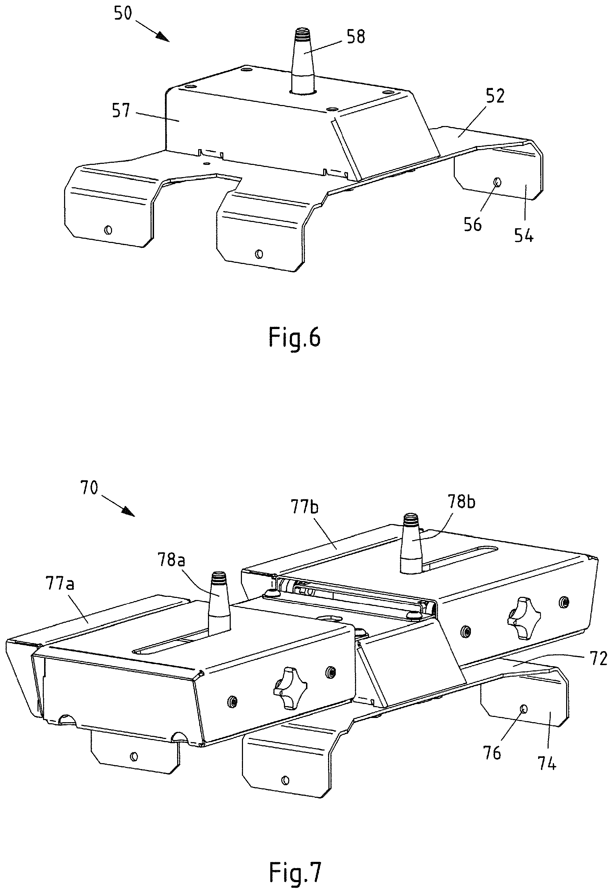

Die Figuren 6 und 7 zeigen zwei Ausführungsbeispiele für ein solches Aufsatzelement in perspektivischer Darstellung.

Figur 6 zeigt ein erstes Aufsatzelement 50 für die Schweißstromquelle 2 aus Figur 1. Das Aufsatzelement 50 weist einen Grundkörper 52 in Form einer Grundplatte mit seitlich daran anschließenden, nach unten abgeknickten Flanschbereichen 54 mit Bohrungen 56 auf. Die Geometrie der Grundplatte 52 und der Flanschbereiche 54 ist so an die Gehäuseoberseite 22 der Schweißstromquelle 2 angepasst, dass das auf die Gehäuseoberseite 22 aufgesetzte Aufsatzelement 50 die Gehäuseoberseite 22 klammerartig umgreift, wobei die Flanschbereiche 54 beidseitig jeweils seitlich so an dem jeweiligen Profil 24a-b anliegen, dass die Bohrungen 56 in Höhe der jeweiligen Nutöffnung 32a-b und der Gewindebohrungen 38 von in den Nuten 28a-b entsprechend positionierten Nutensteinen 30 liegen.

Indem das Aufsatzelement 50 dann durch die Bohrungen 56 mit den Nutensteinen 30 in der jeweiligen Nut 28a-b verschraubt wird, kann das Aufsatzelement 50 fest an der gewünschten Stelle der Gehäuseoberseite 22 fixiert werden.

Auf der Grundplatte 52 des Aufsatzelements 50 ist ein Abstandhalter 57 angeordnet, aus dem ein nach oben gerichteter Dorn 58 herausragt. Um eine Komponente auf der Gehäuseoberseite 22 des Gehäuses 4 zu befestigen, kann die Komponente nun mit einer vorgesehenen unterseitigen Öffnung auf den Dorn 58 des auf die Gehäuseoberseite 22 positionierten Aufsatzelements 50 aufgesetzt werden. Bei dem Dorn 58 handelt es sich also um ein Befestigungsmittel zur Befestigung einer Komponente auf dem Aufsatzelement 50.

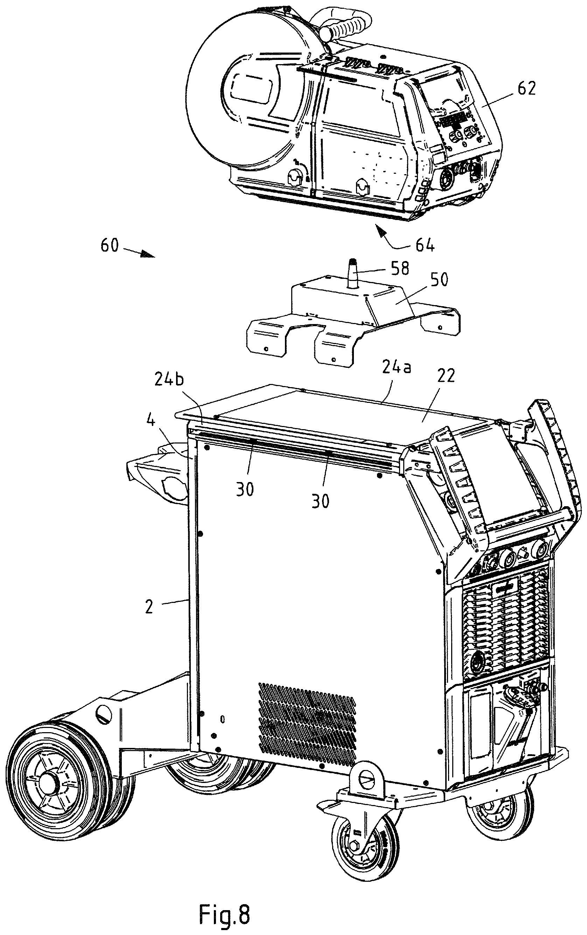

Figur 8 zeigt ein entsprechendes System 60 mit der Schweißstromquelle 2, mit in den Profilen 24a-b eingesetzten Nutensteinen 30, mit dem Aufsatzelement 50 und mit einer auf die Schweißstromquelle 2 bzw. das Aufsatzelement 50 aufzusetzenden Komponente 62 in Form eines Drahtvorschubgerätes. Das Drahtvorschubgerät weist an seiner Unterseite eine an den Dorn 58 angepasste Öffnung 64 auf.

Indem das Aufsatzelement 50 auf das Gehäuse 4 der Schweißstromquelle aufgesetzt und über die Nutensteine 30 mit diesem verschraubt wird und das Drahtvorschubgerät 62 mit der Öffnung 64 auf den Dorn 58 aufgesetzt wird, kann das Drahtvorschubgerät 62 sicher auf der Gehäuseoberseite 22 befestigt werden.

Durch das Vorsehen eines Dorns 56 als Befestigungsmittel, ist das Drahtvorschubgerät 62 drehbar auf dem Aufsatzelement 50 gelagert, so dass es sich bei Zug an einem an den Drahtvorschubgerät 62 anzuschließenden Schweißbrenner (nicht dargestellt) mitbewegen kann, wenn der Bediener zum Beispiel um die Schweißstromquelle 2 herumläuft. Auf diese Weise wird der Arbeitsbereich des Bedieners erhöht, ohne dass die Schweißstromquelle 2 versetzt werden muss.

Figur 7 zeigt ein weiteres Ausführungsbeispiel eines Aufsatzelements 70, das wie das Aufsatzelement 50 einen Grundkörper in Form einer Grundplatte 72 sowie Flanschbereiche 74 mit Bohrungen 76 zur Verbindung an die Nutensteine 30 in den Nuten 28a-b der Profile 24a-b aufweist.

Anders als beim Aufsatzelement 50 weist das Aufsatzelement 70 an der Oberseite zwei Abstandselemente 77a-b mit einem jeweils darin integrierten Dorn 78a-b auf.

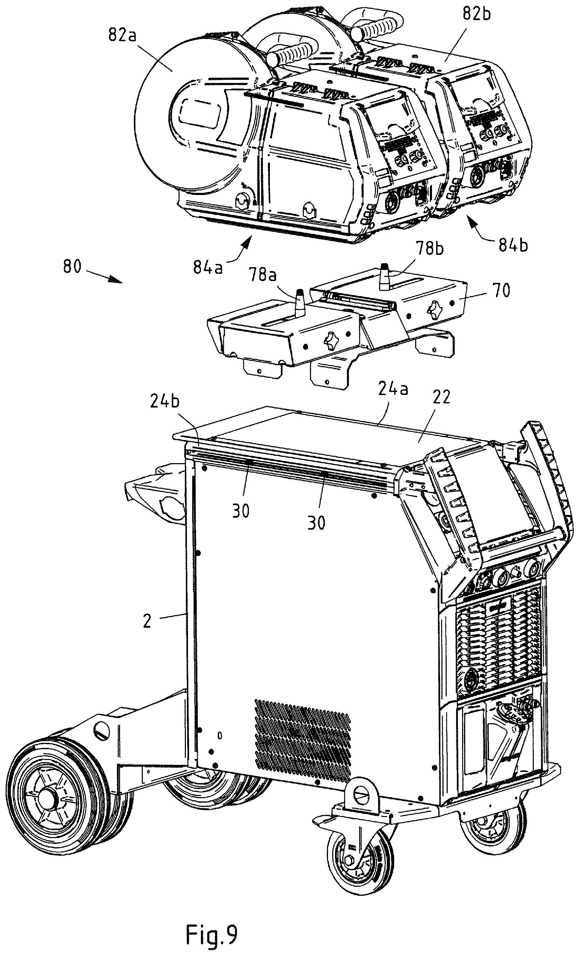

Figur 9 zeigt ein zugehöriges weiteres Ausführungsbeispiel eines Systems 80 mit der Schweißstromquelle 2, mit dem Aufsatzelement 70 und mit zwei auf das Aufsatzelement 70 aufzusetzenden Komponenten 82a-b in Form zweier Drahtvorschubgeräte. Die Komponenten 82a-b weisen an der Unterseite eine jeweilige Öffnung 84a-b auf, mit denen die Komponenten 82a-b auf die Dorne 78a-b aufgesetzt und dadurch mit dem Aufsatzelement 70 und folglich mit der Schweißstromquelle verbunden werden können. Die Dorne 78a-b führen wiederum zu einer drehbaren Lagerung der Komponenten 82a-b mit den zuvor beschriebenen Vorteilen.

Mit dem Aufsatzelement 70 können also gleich zwei Komponenten 82a-b, insbesondere zwei Drahtvorschubgeräte, auf die Schweißstromquelle aufgesetzt werden, auch wenn die Gehäuseoberseite 22 der Schweißstromquelle 2 ohne Aufsatzelement 70 hierfür alleine nicht ausreichend Platz böte.

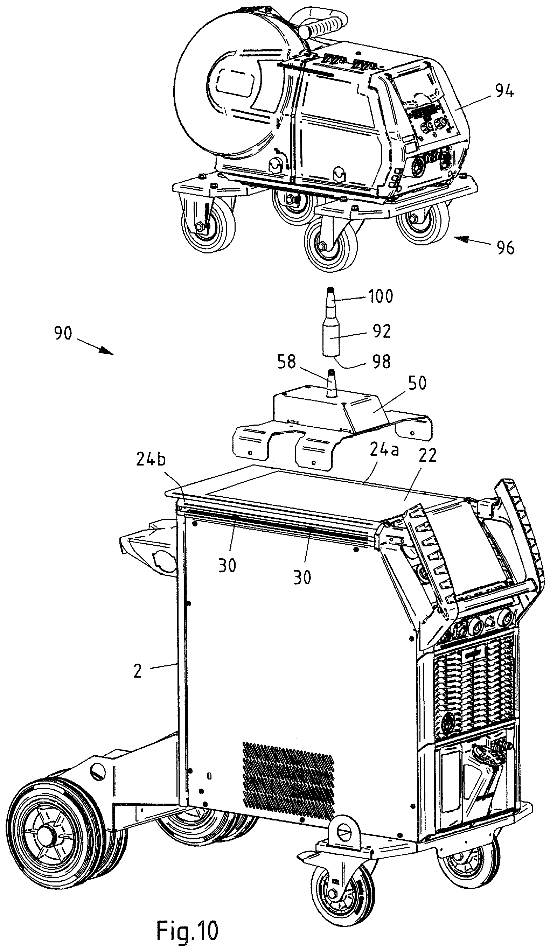

Figur 10 zeigt ein weiteres Ausführungsbeispiel des Systems. Das System 90 umfasst die Schweißstromquelle 2, das Aufsatzelement 50, einer Dornverlängerung 92 sowie eine auf das Aufsatzelement 50 aufzusetzende Komponente 94.

Bei der Komponente 94 handelt es sich vorliegend um ein Drahtvorschubgerät mit einem an der Unterseite vorgesehenen Rollwagen 96. Normalerweise wäre es erforderlich, den Rollwagen 96 zunächst zu demontieren, bevor das Drahtvorschubgerät auf die Schweißstromquelle 2 aufgesetzt werden kann. Durch das Vorsehen der Dornverlängerung 92 mit einer dem Dorn 58 entsprechenden Öffnung 98 auf der Unterseite und einer dem Dorn 58 entsprechenden Dornkontur 100 auf der Oberseite kann die Länge des Dorns 58 variabel verlängert werden, so dass die Komponente 94 auch mit Rollwagen 96 auf das Aufsatzelement 50 und damit auf die Gehäuseoberseite aufgesetzt werden kann. Dies ermöglicht es, das Drahtvorschubgerät 94 wahlweise auf die Schweißstromquelle 2 aufzusetzen oder mit dem Rollwagen 96 auf dem Boden zu verfahren, ohne dass der Rollwagen 96 hierfür montiert oder demontiert werden müsste.

Mit den zuvor beschriebenen Ausführungsbeispielen der Schweißstromquelle und des Systems kann einerseits eine sichere Befestigung einer Komponente auf der Gehäuseoberseite erreicht werden. Durch das Vorsehen der Profile mit den darin anzuordnenden Nutensteinen können praktisch beliebig positionierbare Anschlusspunkte für die aufzusetzenden Komponenten bzw. Aufsatzelemente bereitgestellt werden. Insbesondere ist es nicht mehr erforderlich, Bohrungen in das Gehäuse vorzunehmen, so dass dieses unversehrt bleibt.

Das weiter bevorzugt vorgesehene Aufsatzelement ermöglicht eine zusätzliche einfache Befestigung von Komponenten, insbesondere eine drehbare Befestigung, auf der Gehäuseoberseite, wobei die Dornverlängerung auch das Aufsetzen von Komponenten erlaubt, die aufgrund ihrer Unterbauten normalerweise nicht ohne Weiteres auf die Gehäuseoberseite aufgesetzt werden könnten.

## Patentansprüche

1. Schweißstromquelle (2)
- mit einem Gehäuse (4), das eine Gehäuseoberseite (22) aufweist,
**dadurch gekennzeichnet,**
- **dass** am Gehäuse (4) ein Profil (24a-b) mit einer sich entlang einer Seitenkante (26a-b) der Gehäuseoberseite (22) erstreckenden Nut (28a-b) zur Aufnahme von Befestigungselementen (30) zur Befestigung einer Komponente (62, 82a-b, 94) auf der Gehäuseoberseite (22) vorgesehen ist und
- **dass** am Gehäuse (4) ein weiteres Profil (24a-b) mit einer sich entlang einer der Seitenkante (26a-b) gegenüberliegenden weiteren Seitenkante (26a-b) der Gehäuseoberseite (22) erstreckenden Nut (28a-b) zur Aufnahme von Befestigungselementen (30) zur Befestigung der Komponente (62, 82a-b, 94) auf der Gehäuseoberseite (22) vorgesehen ist.

2. Schweißstromquelle nach Anspruch 1,
**dadurch gekennzeichnet, dass** die Nut (28a-b) eine entlang ihrer Erstreckungsrichtung verlaufende Hinterschneidung aufweist, um ein in der Nut (28a-b) angeordnetes Befestigungselement (30) in der Nut (28a-b) zu halten.

3. Schweißstromquelle nach Anspruch 1 oder 2,
**dadurch gekennzeichnet, dass** das Profil (24a-b) an einem Ende eine Einführöffnung (36) zum Einführen von Befestigungselementen (30) in die Nut (24a-b) aufweist.

4. Schweißstromquelle nach Anspruch 3,
**dadurch gekennzeichnet, dass** die Einführöffnung (36) auf der Rückseite des Gehäuses (4) angeordnet ist.

5. Schweißstromquelle nach einem der Ansprüche 1 bis 4,
**dadurch gekennzeichnet, dass** die Nutöffnung (32a-b) der Nut (28a-b) in einer Ebene liegt, die zu der Gehäuseoberseite (22) in einem Winkel von mindestens 45° verläuft, vorzugsweise im Wesentlichen senkrecht zur Gehäuseoberseite (22).

6. Schweißstromquelle nach einem der Ansprüche 1 bis 5,
**dadurch gekennzeichnet, dass** mindestens ein Steg (39) vorgesehen ist, der sich über oder neben der Nut (28a-b) über die Nutöffnung (32a-b) erstreckt.

7. System (40, 60, 80, 90)
- mit einer Schweißstromquelle (2) nach einem der Ansprüche 1 bis 6 und
- mit einem oder mehreren Befestigungselementen (30), insbesondere Nutensteinen, die in die sich entlang der Seitenkante (26a-b) der Gehäuseoberseite (22) erstreckende Nut (28a-b) einsetzbar sind.

8. System nach Anspruch 7,
**dadurch gekennzeichnet, dass** die Befestigungselemente (30) in der Nut (28a-b) entlang der Seitenkante (26a-b) verschiebbar sind.

9. System nach Anspruch 7 oder 8,
weiter umfassend ein auf die Gehäuseoberseite (22) der Schweißstromquelle (2) aufsetzbares Aufsatzelement (50, 70), das über die Befestigungselemente (30) am Gehäuse (2) befestigt werden kann, wenn die Befestigungselemente (30) in der Nut (28a-b) angeordnet sind, und Befestigungsmittel (58, 78a-b) zur Befestigung einer Komponente (62, 82a-b, 94) auf dem Aufsatzelement aufweist.

10. System nach Anspruch 9,
**dadurch gekennzeichnet, dass** das Aufsatzelement (70) Befestigungsmittel (78ab) zur Befestigung mehrerer Komponenten auf dem Aufsatzelement aufweist.

11. System nach Anspruch 9 oder 10,
**dadurch gekennzeichnet, dass** die Befestigungsmittel des Aufsatzelements (50, 70) einen Dorn (58, 78a-b) zur drehbaren Befestigung einer Komponente (62, 82a-b, 94) durch Aufsetzen der Komponente (62, 82a-b, 94) auf den Dorn (58, 78a-b) aufweisen.

12. System nach Anspruch 11,
weiter umfassend eine auf den Dorn (58, 78a-b) des Aufsatzelements (50, 70) aufsteckbare Dornverlängerung (92), mit der die Länge des Dorns (58, 78a-b) verlängert werden kann.

13. System nach einem der Ansprüche 7 bis 12,
weiter umfassend eine Komponente (62, 82a-b, 94), insbesondere eine Schweißkomponente, die auf der Gehäuseoberseite (22) der Schweißstromquelle (2) positioniert und über die Befestigungselemente (30), wenn diese in der Nut (28a-b) angeordnet sind, oder über ein über die Befestigungselemente (30) am Gehäuse (4) befestigbares Aufsatzelement (50, 70) am Gehäuse (4) befestigt werden kann.

## Claims

1. Welding power source (2)
- having a housing (4) which has a housing upper side (22),
**characterised**
- **in that**, on the housing (4), a profile (24a-b) is provided having a groove (28a-b) for receiving fastening elements (30) for fastening a component (62, 82a-b, 94) on the housing upper side (22), the groove extending along a side edge (26a-b) of the housing upper side (22), and
- **in that**, on the housing (4), a further profile (24a-b) is provided having a groove (28a-b) for receiving fastening elements (30) for fastening the component (62, 82a-b, 94) on the housing upper side (22), the groove of the further profile extending along a further side edge (26a-b) of the housing upper side (22) opposed to the side edge (26a-b).

2. Welding current source according to claim 1,
**characterised in that** the groove (28a-b) has an undercut running along its extension direction in order to hold in the groove (28a-b) a fastening element (30) arranged in the groove (28a-b).

3. Welding current source according to claim 1 or 2,
**characterised in that** the profile (24a-b) at one end has an insertion opening (36) for inserting fastening elements (30) into the groove (28a-b).

4. Welding current source according to claim 3,
**characterised in that** the insertion opening (36) is arranged on the rear side of the housing (4).

5. Welding current source according to any one of claims 1 to 4,
**characterised in that** the groove opening (32a-b) of the groove (28a-b) lies in a plane running at an angle of at least 45° to the housing upper side (22), preferably substantially perpendicular to the housing upper side (22).

6. Welding current source according to any one of claims 1 to 5,
**characterised in that** at least one web (39) is provided which extends over or next to the groove (28a b) over the groove opening (32a-b).

7. System (40, 60, 80, 90)
- having a welding power source (2) according to any one of claims 1 to 6 and
- having one or a plurality of fastening elements (30), in particular groove blocks, which can be inserted into the groove (28a-b) extending along the side edge (26a-b) of the housing upper side (22).

8. System according to claim 7,
**characterised in that** the fastening elements (30) can be displaced in the groove (28a-b) along the side edge (26a-b).

9. System according to claim 7 or 8,
further comprising an attachment element (50, 70) which can be placed on the housing upper side (22) of the welding power source (2) and which can be fastened on the housing (2) via the fastening elements (30) if the fastening elements (30) are arranged in the groove (28a-b) and which has fastening means (58, 78a-b) for fastening a component (62, 82a-b, 94) on the attachment element.

10. System according to claim 9,
**characterised in that** the attachment element (70) has fastening means (78a-b) for fastening a plurality of components on the attachment element.

11. System according to claim 9 or 10,
**characterised in that** the fastening means of the attachment element (50, 70) have a mandrel (58, 78a-b) for rotatably fastening a component (62, 82a-b, 94) by placing the component (62, 82a-b, 94) on the mandrel (58, 78a-b).

12. System according to claim 11,
further comprising a mandrel extension (92) which can be placed on the mandrel (58, 78a-b) of the attachment element (50, 70) and with which the length of the mandrel (58, 78a-b) can be extended.

13. System according to any one of claims 7 to 12,
further comprising a component (62, 82a-b, 94), in particular a welding component, which can be positioned on the housing upper side (22) of the welding current source (2) and can be fastened on the housing (4) via the fastening elements (30), if they are arranged in the groove (28a-b), or via an attachment element (50, 70) which can be fastened on the housing (4) via the fastening elements (30).

## Revendications

1. Source de courant de soudage (2)
- avec un boîtier (4) qui présente une face supérieure de boîtier (22), **caractérisée**
- **en ce que**, au niveau du boîtier (4), un profilé (24a-b) est prévu avec une rainure (28a-b) s'étendant le long d'une arête latérale (26a-b) de la face supérieure du boîtier (22) pour recevoir des éléments de fixation (30) pour la fixation d'un composant (62, 82a-b, 94) sur la face supérieure du boîtier (22), et
- **en ce que**, au niveau du boîtier (4), un profilé supplémentaire (24a-b) est prévu avec une rainure (28a-b) s'étendant le long d'une autre arête latérale (26a-b) de la face supérieure (22) du boîtier, l'autre arête latérale étant opposée à l'arête latérale (26a-b), pour recevoir des éléments de fixation (30) pour la fixation du composant (62, 82a-b, 94) sur la face supérieure (22) du boîtier.

2. Source de courant de soudage selon la revendication 1,
**caractérisée en ce que** la rainure (28a-b) présente une contre-dépouille s'étendant le long de sa direction d'extension, afin de maintenir dans la rainure (28a-b) un élément de fixation (30) disposé dans la rainure (28a-b).

3. Source de courant de soudage selon la revendication 1 ou 2,
**caractérisée en ce que** le profilé (24a-b) présente à une extrémité une ouverture d'insertion (36) pour l'insertion d'éléments de fixation (30) dans la rainure (24a-b).

4. Source de courant de soudage selon la revendication 3,
**caractérisée en ce que** l'ouverture d'insertion (36) est disposée sur la face arrière du boîtier (4).

5. Source de courant de soudage selon l'une des revendications 1 à 4,
**caractérisée en ce que** l'ouverture de rainure (32a-b) de la rainure (28a-b) est située dans un plan formant un angle d'au moins 45° avec la face supérieure (22) du boîtier, de préférence sensiblement perpendiculaire à la face supérieure (22) du boîtier.

6. Source de courant de soudage selon l'une des revendications 1 à 5,
**caractérisée en ce qu'**au moins une traverse (39) qui s'étend au-dessus ou à côté de la rainure (28a-b) au-dessus de l'ouverture de rainure (32a-b) est prévue.

7. Système (40, 60, 80, 90)
- avec une source de courant de soudage (2) selon l'une des revendications 1 à 6 et
- avec un ou plusieurs éléments de fixation (30), en particulier des coulisseaux, qui peuvent être insérés dans la rainure (28a-b) s'étendant le long de l'arête latérale (26a-b) de la face supérieure du boîtier (22).

8. Système selon la revendication 7,
**caractérisée en ce que** les éléments de fixation (30) peuvent être déplacés dans la rainure (28a-b) le long de l'arête latérale (26a-b).

9. Système selon la revendication 7 ou 8,
comprenant en outre un élément rapporté (50, 70) pouvant être placé sur la face supérieure (22) du boîtier de la source de courant de soudage (2), lequel élément rapporté pouvant être fixé au boîtier (2) par l'intermédiaire des éléments de fixation (30) lorsque les éléments de fixation (30) sont disposés dans la rainure (28a-b), et présentant des moyens de fixation (58, 78a-b) pour fixer un composant (62, 82a-b, 94) sur l'élément rapporté.

10. Système selon la revendication 9,
**caractérisé en ce que** l'élément rapporté (70) comprend des moyens de fixation (78a-b) pour fixer plusieurs composants sur l'élément rapporté.

11. Système selon la revendication 9 ou 10,
**caractérisé en ce que** les moyens de fixation de l'élément rapporté (50, 70) comprennent un mandrin (58, 78a-b) pour la fixation rotative d'un composant (62, 82a-b, 94) en plaçant le composant (62, 82a-b, 94) sur le mandrin (58, 78a-b).

12. Système selon la revendication 11,
comprenant en outre une extension de mandrin (92) emboîtable sur le mandrin (58, 78a-b) de l'élément rapporté (50, 70), permettant d'allonger la longueur du mandrin (58, 78a-b).

13. Système selon l'une des revendications 7 à 12,
comprenant en outre un composant (62, 82a-b, 94), en particulier un composant de soudage, qui peut être positionné sur la face supérieure (22) du boîtier de la source de courant de soudage (2) et fixé au boîtier (4) par l'intermédiaire des éléments de fixation (30), lorsque ceux-ci sont disposés dans la rainure (28a-b), ou par l'intermédiaire d'un élément rapporté (50, 70) pouvant être fixé au boîtier (4) par l'intermédiaire des éléments de fixation (30).
